## Europäisches Patentamt
## European Patent Office
## Office européen des brevets

(11) Numéro de publication : **0 005 120**
**B1**

(12) # FASCICULE DE BREVET EUROPÉEN

(45) Date de publication du fascicule du brevet :
13.07.83

(51) Int. Cl.³ : **B 62 D 27/06**, B 62 D 33/04

(21) Numéro de dépôt : 79420018.8

(22) Date de dépôt : **11.04.79**

(54) **Dispositif pour rendre amovibles et verrouillables les montants et ranchets de superstructures équipant les châssis de véhicules de transport.**

(30) Priorité : 18.04.78 FR 7812240

(43) Date de publication de la demande :
31.10.79 Bulletin 79/22

(45) Mention de la délivrance du brevet :
13.07.83 Bulletin 83/28

(84) Etats contractants désignés :
**DE GB IT**

(56) Documents cités :
**DE A 1 580 650**
**DE A 2 233 779**
**FR A 1 579 874**
**FR A 2 023 436**
**FR A 2 032 612**
**FR A 2 271 106**
**FR A 2 278 556**
**US A 3 894 766**

(73) Titulaire : **Etablissements Françon et Cie (société anonyme)**
**5 avenue Berthelot**
**L'Horme F-42400 Saint-Chamond (FR)**

(72) Inventeur : **Françon, Jean**
**15 rue de la Verronnière ·**
**F-42400 Saint-Chamond (FR)**

(74) Mandataire : **Buttet, Roger et al**
**"Cabinet Charras" 3, Place de l'Hôtel-de-Ville**
**F-42000 Saint-Etienne (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

# Dispositif pour rendre amovibles et verrouillables les montants et ranchets de superstructures équipant les châssis de véhicules de transport

L'objet de l'invention se rattache notamment au secteur technique des moyens de transport pour véhicules ou containers comprenant des superstructures de chargement fixées sur le châssis du véhicule.

Les véhicules routiers et ferroviaires utilisés pour le transport d'objets lourds et encombrants ou manutentionnés sur palettes par groupes ou autrement, sont en général constitués par une superstructure fixe, c'est-à-dire installée à demeure sur le châssis du véhicule.

Les superstructures se composent généralement de montants d'angles et intermédiaires assemblés au châssis et notamment aux longerons du véhicule, et d'éléments de carrossage comprenant par exemple, des panneaux fixes ou amovibles, des ridelles, des arceaux supports de bâche, des portes, des hausses...

Le plus souvent, l'ouverture des portes, le débâchage et l'enlèvement des arceaux ou l'enlèvement d'un ou plusieurs panneaux latéraux ou ridelles, suffisent pour opérer le chargement ou le déchargement des produits ou éléments transportés.

Cependant, il arrive que pour des raisons d'encombrement du ou des produits transportés, ou de commodités d'accès, on soit obligé d'enlever le ou les montants intermédiaires dans la longueur de la superstructure. Cette opération est généralement malaisée et ne peut pas s'exécuter rapidement avec les dispositions connues d'adaptation et de solidarisation amovibles des montants.

On connaît, par la demande de brevet FR-A-2 023 436, un dispositif pour rendre amovibles et verrouillables deux montants, inférieur et supérieur, articulés entre eux, de superstructures équipant les châssis de véhicules de transport, du type comprenant un organe de verrouillage coulissant dans le montant inférieur et coopérant avec un organe complémentaire solidaire du châssis du véhicule, l'organe de verrouillage étant actionné par un levier de manœuvre. L'invention se caractérise en ce que le montant supérieur coopère avec un moyen d'accrochage solidaire de la barre de rive de la superstructure, autorisant l'engagement dudit montant supérieur selon une position angulaire, dans un plan vertical par rapport à l'axe longitudinal horizontal dudit moyen d'accrochage, celui-ci, après engagement, assurant le verrouillage en position du montant supérieur, lors de son déplacement en hauteur, par suite de la mise en place du montant inférieur et de la fixation des deux montants à la superstructure, par l'actionnement de l'organe de verrouillage.

Suivant l'invention, on a voulu éliminer les inconvénients des réalisations connues et apporter d'importantes améliorations dans la fabrication et le fonctionnement en créant des montants amovibles et verrouillables rapidement, avec une bonne précision de positionnement en hauteur, une sécurité et une efficacité accrues, cela sous un faible encombrement.

Dans ce qui suit, l'invention est exposée plus en détail à l'aide des dessins représentant seulement un mode d'exécution :

La figure 1 est une vue en perspective à caractère schématique, illustrant une superstructure équipée de montants suivant l'invention ;

La figure 2 est une vue schématique en perspective illustrant une superstructure équipée de montants dont le montant supérieur est muni d'un moyen d'accrochage ;

La figure 3 est une vue en perspective des moyens avant montage, selon la réalisation de la figure 2 ;

La figure 4 est une vue de profil en coupe, illustrant le positionnement final des montants supérieurs et inférieurs ;

La figure 5 est une vue de face en coupe, selon la ligne 5-5 de la figure 4 ;

La figure 6 est une vue partielle de face, illustrant l'engagement angulaire du montant supérieur dans le moyen d'accrochage solidaire de la barre de rive ;

La figure 7 est une vue partielle de face, illustrant le montant supérieur en appui par gravité dans la boucle ;

La figure 8 est une vue partielle de côté, illustrant le positionnement du montant supérieur par rapport au montant inférieur, avant fixation définitive ;

La figure 9 est une vue de profil en coupe, illustrant le positionnement final des montants supérieur et inférieur, selon une variante de réalisation des organes de verrouillage ;

La figure 10 est une vue de face en coupe, selon la ligne 10-10 de la figure 9 ;

La figure 11 est une vue en perspective, à plus grande échelle, illustrant partiellement un montant inférieur selon une première forme de réalisation, engagé sur le sabot solidaire du longeron et représenté dans une position de verrouillage intermédiaire ;

La figure 12 est une vue en coupe longitudinale considérée suivant la ligne 12-12 de la figure 11. On a représenté en traits interrompus, les positions de déverrouillage et intermédiaires, et en traits continus la position de verrouillage ;

Les figures 13 et 14 sont des vues en coupe considérées respectivement suivant les lignes 13-13 et 14-14 de la figure 12 ;

Les figures 15 et 16 sont des vues en coupe longitudinale semblables à la figure 12, mais représentant respectivement les positions intermédiaire et de déverrouillage ;

La figure 17 est une vue en perspective illustrant partiellement un montant inférieur selon une deuxième forme de réalisation, avant montage sur le sabot solidaire du longeron ;

Les figures 18, 19 et 20 sont des vues en coupe longitudinale illustrant cette deuxième réalisation, respectivement dans la position de déverrouillage, intermédiaire et de verrouillage ;

La figure 21 est une vue en coupe considérée suivant la ligne 21-21 de la figure 20 ;

La figure 22 est une vue en coupe considérée suivant la ligne 22-22 de la figure 21. On a illustré en traits interrompus, des panneaux ou ridelles adjacents au montant ;

La figure 23 est une vue en perspective illustrant les principaux éléments composant le dispositif de verrouillage, selon cette deuxième réalisation.

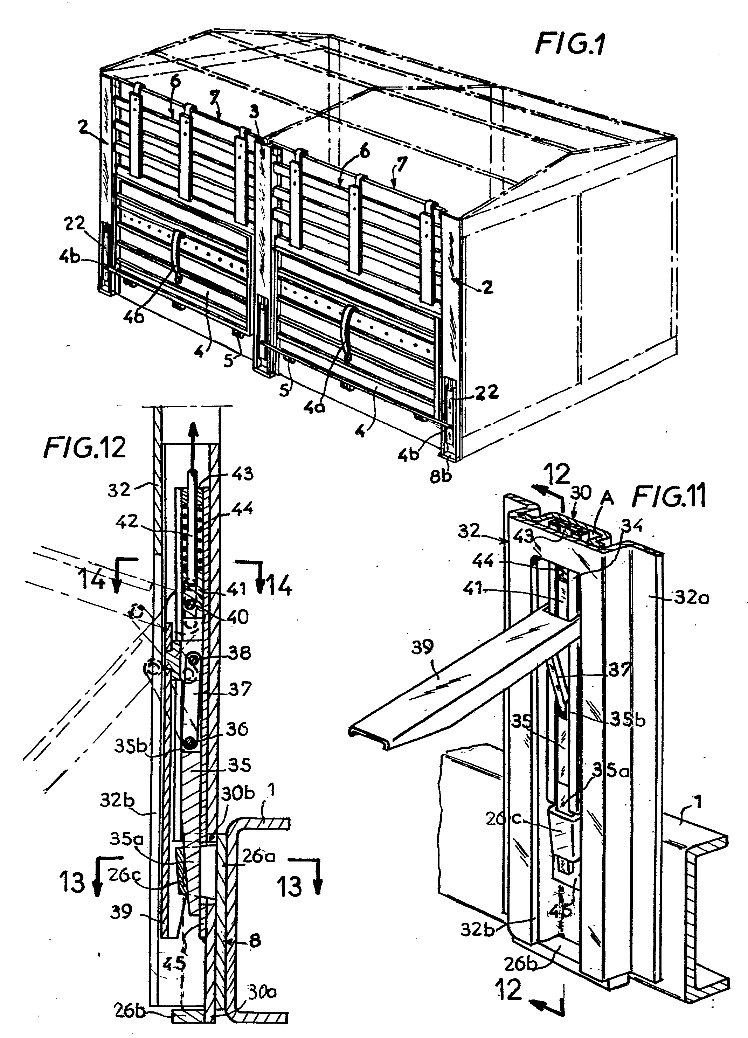

On a représenté à titre d'exemple, à la figure 1, une superstructure montée sur un châssis de véhicule dont on a représenté seulement les longerons 1. Sur ces longerons sont fixés de manière amovible, des montants d'angle 2 et intermédiaires 3. Des ridelles 4, en alliage léger profilées, sont articulées en 5 aux longerons 1 et verrouillables en position fermée par levier 4a associé à une barre à verrou ou similaire. Ces ridelles arrivent sensiblement à mi-hauteur des montants et l'espace restant est fermé par des réhausses 6 qui sont suspendues à des barres longitudinales 7 engagées dans les extrémités supérieures des montants 2 et 3 et retenues à leur partie inférieure, par exemple, par engagement derrière les panneaux.

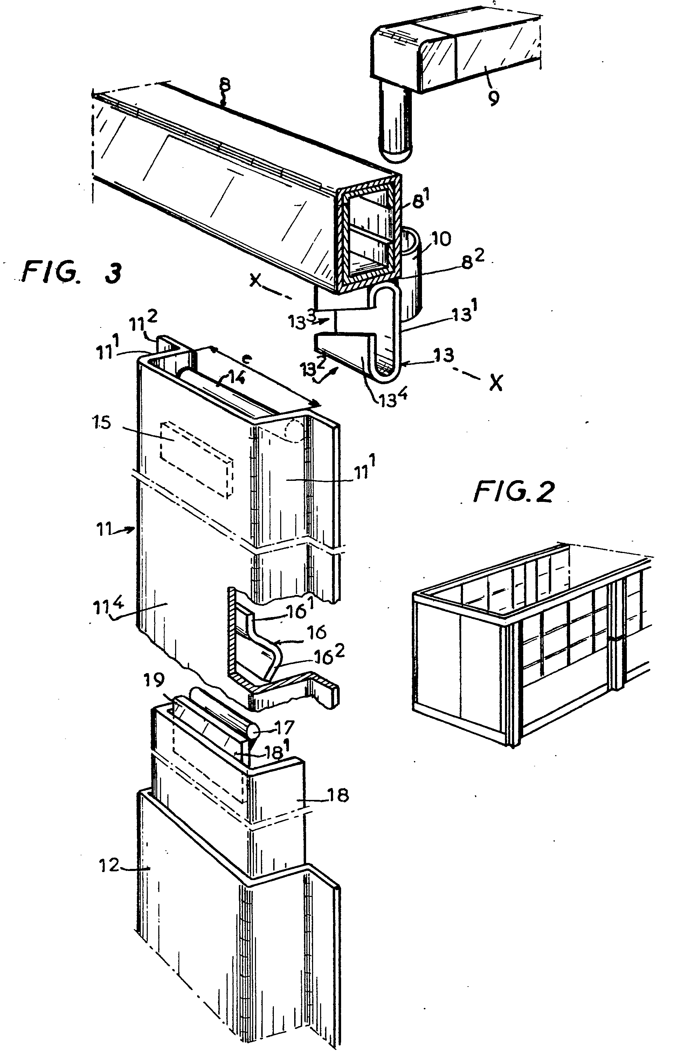

Dans le cadre d'une autre réalisation, on a représenté schématiquement à la figure 2, une superstructure équipant les châssis de véhicules de transport avec deux montants intermédiaires constitués de deux demi-parties articulées entre elles ; la partie supérieure de ces derniers étant équipée du dispositif d'accrochage et de verrouillage, également selon l'invention.

On a illustré partiellement selon la figure 3, la barre de rive 8 et un arceau intermédiaire 9 s'engageant dans une douille 10 solidaire de la face arrière $8^1$ de la barre de rive. Le montant intermédiaire est formé par deux éléments, à savoir, le montant supérieur 11 et le montant inférieur 12. Le montant supérieur 11 coopère avec un moyen d'accrochage formant boucle 13, solidaire de la barre de rive et soudé notamment sur sa base inférieure $8^2$. La face arrière $13^1$ de la boucle 13 se trouve dans le prolongement du côté arrière $8^1$ de la barre de rive. La largeur 1 de ladite boucle est inférieure à la largeur de la section L de ladite barre. Cette boucle est remarquable en ce qu'elle présente sur sa face frontale $13^2$, une fente $13^3$ formée angulairement par rapport à l'axe longitudinal X-X de la boucle.

Le montant supérieur 11 présente une forme profilée en U dont les ailes $11^1$ sont rabattues extérieurement pour former des pattes $11^2$. L'espace interne entre les ailes $11^1$, est sensiblement plus large que la longueur de la boucle 13. Entre lesdites ailes $11^1$ est disposé, d'une manière fixe, par rivetage ou autrement, un moyen d'accrochage 14 tel que notamment, un axe dont la section diamétrale est sensiblement inférieure à la largeur de la fente $13^3$, afin de permettre son engagement. L'axe 14 est placé sensiblement près des extrémités des ailes latérales. Une butée 15 en saillie sur le fond $11^3$ du

montant 11, vient en appui contre la partie frontale inférieure $13^4$ de la boucle, en vue d'assurer une perpendicularité parfaite du montant supérieur 11, lors de la fixation et du verrouillage du montant supérieur 11 et du montant inférieur 12. En outre, le montant supérieur 11 présente dans sa partie inférieure $11^4$, un support 16 soudé à l'une de ses extrémités $16^1$, à ladite partie $11^4$. Son autre extrémité $16^2$, décalée et orientée vers le bas, forme berceau d'appui et de centrage d'un tasseau 17 solidaire du montant inférieur (12). Ce dernier est de même section que le montant 11 et présente dans sa partie supérieure, un prolongement 18 de section en U, débordant et destiné à s'engager dans la partie interne inférieure du montant supérieur 11. Ce prolongement 18 comprend intérieurement à son extrémité débordante $18^1$, une patte soudée 19 avec à son extrémité libre, le tasseau ou axe fixe 17 déporté extérieurement, destiné à coopérer avec le berceau $16^2$. L'extrémité inférieure du montant inférieur est convenablement fixée à la partie inférieure de la superstructure, comme décrit par la suite.

Il convient dès lors d'expliciter le fonctionnement d'un tel dispositif :

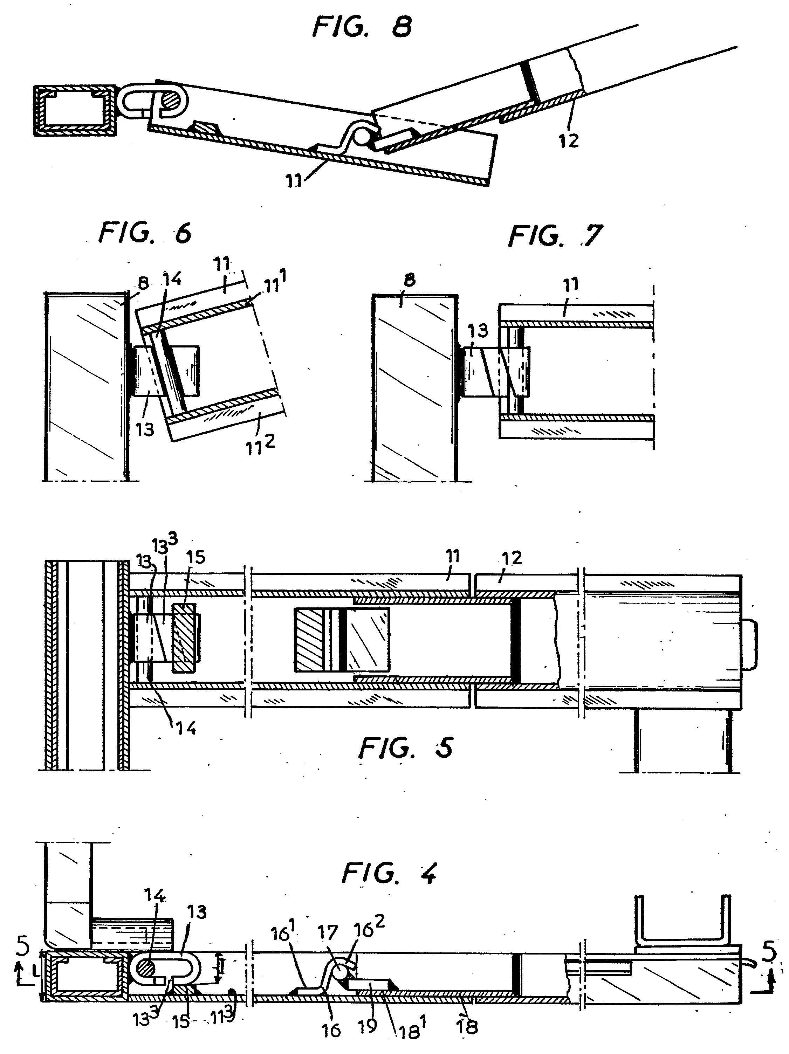

L'opérateur présente angulairement le montant supérieur 11 face à la boucle 13, comme illustré figure 6. Après engagement de l'axe 14 dans la boucle, le montant est placé en position normale, c'est-à-dire verticale, figure 7, l'axe 14 venant en appui dans le fond de la boucle. Le montant ne peut aucunement se dégager du moyen d'accrochage, il faut une action volontaire pour le faire. Il y a donc un verrouillage en position du montant supérieur dans la boucle. Ensuite, le montant inférieur est disposé en articulation inférieure, sur son support. On fait basculer sensiblement le montant supérieur 11 afin de pouvoir engager l'axe 17 du montant inférieur et de le disposer en appui dans le berceau $16^2$, figure 8. A cet instant, l'axe 14 est toujours en appui dans le fond de la boucle. Pour fermer le dispositif, on agit comme illustré figure 8. Le pivotement du montant 12 provoque le déplacement en hauteur du montant supérieur, l'axe d'accrochage 14 venant alors en appui contre le fond supérieur de la boucle.

L'on comprend ainsi que la manipulation est très simple et peut se faire en toute sécurité.

Il suffit ensuite d'effectuer un verrouillage de l'ensemble par l'action d'un levier disposé à la partie inférieure du montant inférieur, comme il sera décrit par la suite.

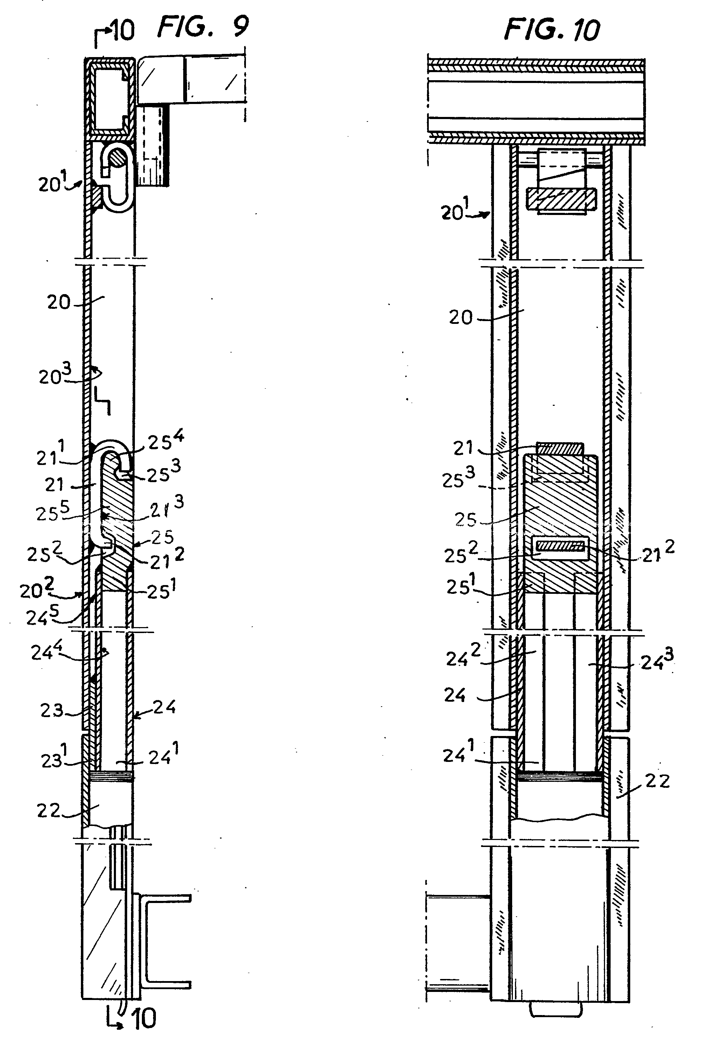

Selon une variante de réalisation du dispositif de fixation figures 9 et 10, le montant supérieure 20 comprend dans sa partie supérieure $20^1$, les mêmes moyens d'accrochage que ceux préalablement décrits. Dans sa partie inférieure $20^2$, une patte 21 profilée est soudée à la face interne dudit montant 20. Cette patte présente des parties extrêmes $21^1$ et $21^2$ recourbées sur elles-mêmes en formant crochet. L'extrémité $21^2$ de la patte est recourbée angulairement sur environ 90 degrés.

Le montant inférieur 22 présente intérieurement en débordement, deux profilés successifs 23-24 s'engageant l'un dans l'autre et soudés à leur extrémité inférieure $23^1$-$24^1$ audit montant inférieur 22. Le profilé 24 solidaire par soudure du profilé 23, est avantageusement constitué de deux demi-parties $24^2$-$24^3$, comme illustré figure 10. La face interne $24^4$ de l'une d'elles se trouve dans le même plan que la face centrale interne $21^3$ de la patte 21. Dans la partie supérieure $24^5$ du profilé 24 est engagée et fixée l'extrémité inférieure $25^1$ d'un élément 25 de verrouillage inférieur, destiné à coopérer avec les extrémités crochetées $21^1$-$21^2$ de la patte 21 solidaire du montant supérieur.

A cet effet, cet élément 25 comprend deux évidements $25^2$-$25^3$ dans lesquels s'engagent les extrémités des crochets $21^1$-$21^2$. Les deux évidements $25^2$-$25^3$ sont disposés en opposition par rapport au plan longitudinal de la pièce 25, comme cela apparaît clairement à la figure 9 des dessins. La partie supérieure $25^4$ forme moyen d'appui s'engageant dans la cavité interne du crochet supérieur $21^1$. La partie centrale $25^5$ de l'élément 25 vient directement en appui ou sensiblement, contre la face intérieure centrale $21^3$ de la patte. La mise en place du montant supérieur et du montant inférieur est effectuée de la même façon que précédemment.

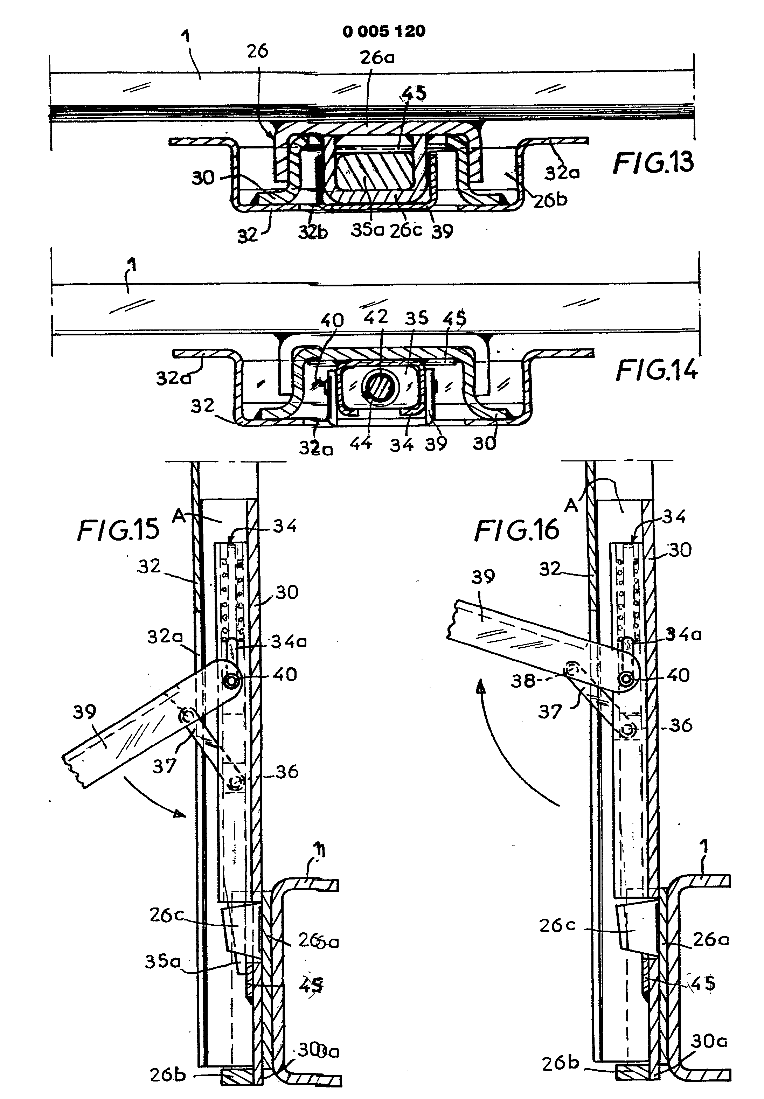

On se réfère maintenant aux figures 11 à 23 par lesquelles on a plus particulièrement illustré le mode de verrouillage du montant inférieur.

Selon les deux formes de réalisation illustrées aux figures des dessins, les montants intermédiaires et d'angle sont assemblés aux longerons 1 par engagement en butée dans un sabot solidaire du longeron. A cet effet, le sabot repéré respectivement en 26-27 dans les deux réalisations, présente un profilé en U 26a-27a soudé ou autrement fixé au longeron. A sa partie inférieure, le sabot présente un fond 26b-27b débordant latéralement et à l'avant, tandis qu'à l'arrière un espace reste libre entre ce fond et la face arrière du profilé pour y engager une languette 30a-31a formée dans un profilé 30-31 constituant un élément du montant et limité en hauteur à la partie du montant recevant les mécanismes de verrouillage.

Dans les réalisations illustrées on décrit des montants intermédiaires, c'est-à-dire comprenant un profilé de recouvrement 32-33 à deux « battues » ou dégagements latéraux 32a-33a, pour l'appui des panneaux, ridelles et autres éléments de carrossage. Bien entendu, pour les montants d'angle qui n'ont en général qu'une seule battue, le dispositif de verrouillage et de montage sur le longeron reste valable.

Le profilé 32-33 est soudé ou autrement fixé contre le profilé 30-31, de manière à ce qu'ils constituent entre eux dans la partie centrale, un logement rectangulaire A-B, destiné à contenir le mécanisme de verrouillage (figures 11, 17). Le profilé 32-33 repose sur le fond 26b-27b du sabot, ce qui assure ainsi un positionnement précis en hauteur du montant par rapport au longeron.

Dans la première réalisation illustrée aux figures 11 à 16, dans l'espace A entre les profilés 30 et 32, est soudée ou autrement fixée, une glissière 34 dans laquelle peut coulisser une pièce rectangulaire 35 dont l'extrémité inférieure ou pêne est effilée à l'avant en 35a, tandis que l'extrémité supérieure forme une chape 35b pour l'articulation en 36 d'une biellette 37 également articulée en 38 à un levier 39 lui-même articulé en 40, de chaque côté de la glissière, par des lumières oblongues 34a. L'axe 40 d'articulation du levier traverse également un bloc 41 coulissant dans la glissière et recevant une tige 42 qui traverse un bouchon 43 fixé à la partie supérieure de la glissière. Entre le bouchon 43 et le bloc 41, est placé un ressort à boudins 44 concentrique à la tige 42 et comprimé au repos, c'est-à-dire dans la position de verrouillage représentée à la figure 12, de manière à permettre l'appui en pression de l'extrémité inférieure ou pêne 35a de la pièce 35 dans un étrier ou gâche 26c passant à travers une ouverture 30b du profilé 30 et soudé ou autrement fixé sur le profilé 26a du sabot 26. La gâche 26c présente une paroi d'appui inclinée complémentaire à l'extrémité 35a qui déborde en dessous de la gâche en position de verrouillage et passe devant une plaque de niveau 45 rapportée sur le profilé 30.

En se référant plus particulièrement aux figures 12, 15 et 16, on décrit maintenant le fonctionnement du dispositif : On place le montant sur son sabot en engageant la languette 30a dans l'espace libre au fond du sabot, tout en maintenant le montant incliné vers l'avant. On ramène verticalement le montant en relevant le levier 39 au maximum (figure 16), afin que le biellette 37 tire vers le haut la pièce 35 en dégageant ainsi l'ouverture 30b.

Lorsque le montant est en place, on abaisse le levier 39 qui pousse par la biellette 37, la pièce 35 qui vient dans la gâche par son extrémité 35a. A ce moment, le levier est dans une position intermédiaire inclinée vers le bas et son axe 40 d'articulation est en bas des lumières oblongues 34a (figures 15). On appuie alors sur le levier 39 pour le ramener dans le prolongement du montant dont le profilé 32b (figure 11). Cette action oblige par réaction du contact entre la gâche et le pêne, l'axe 40 d'articulation du levier 39 à remonter dans les lumières 34a en entraînant le bloc 41 qui comprime le ressort 44. En fin de course, la biellette 37 a son axe longitudinal qui a dépassé la verticale (figure 12), ce qui permet en combinaison avec le ressort, de maintenir le levier dans cette position de verrouillage.

Pour éviter que l'on puisse malencontreusement relever le levier, on prévoit d'assurer cette position par une sécurité supplémentaire telle que goupillage du levier, cadenassage... ou plus simplement en prolongeant en 4b un élément d'un panneau ou ridelle adjacent (figure 1) pour le faire passer devant le levier.

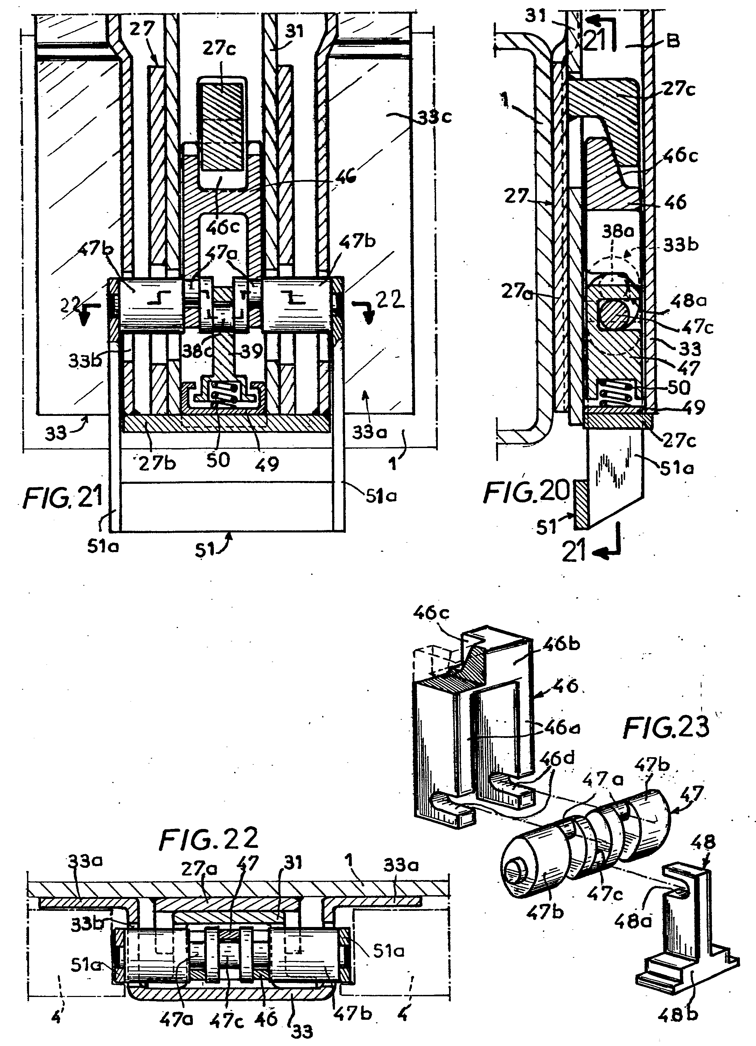

Dans la seconde réalisation illustrée aux figures 17 à 23, on engage directement dans l'espace B entre les profilés 31 et 33 du montant, l'organe de verrouillage 46 qui comprend deux branches verticales 46a reliées à la partie supérieure par une partie pleine 46b découpée sur l'avant pour former une entaille inclinée 46c (figure 23) destinée à s'engager derrière une forme complémentaire en saillie 27c rapportée sur le sabot 27 (figure 17). A la partie inférieure, les branches 46a présentent des entailles identiques 46d dans lesquelles se logent les manetons alignés 47a d'un vilebrequin 47 dont les portées axiales 47b tournent librement dans des lumières oblongues 33b formées sur les côtés du profilé 33 (figure 17). A l'opposé des manetons 47a, un maneton central 47c s'engage dans une fente 48a réalisée à la partie supérieure d'un poussoir 48 dont la partie inférieure épaulée 48b est engagée dans un profilé 49 fermant le profilé 31 (figure 21). Entre le poussoir 48 et le profilé 49 est interposé un ressort à boudins 50.

Les extrémités du vilebrequin sont reliées aux bras 51a d'un levier 51 manœuvrable par sa barre de liaison 51b. Les bras 51a sont dans l'alignement des côtés du profilé 33 qui présente à cet effet des décrochements 33c.

Le levier 51 peut être bloqué en position de verrouillage, comme illustré à la figure 22, par appui des panneaux ou ridelles 4 (représentées en traits interrompus) sur les bras 51a.

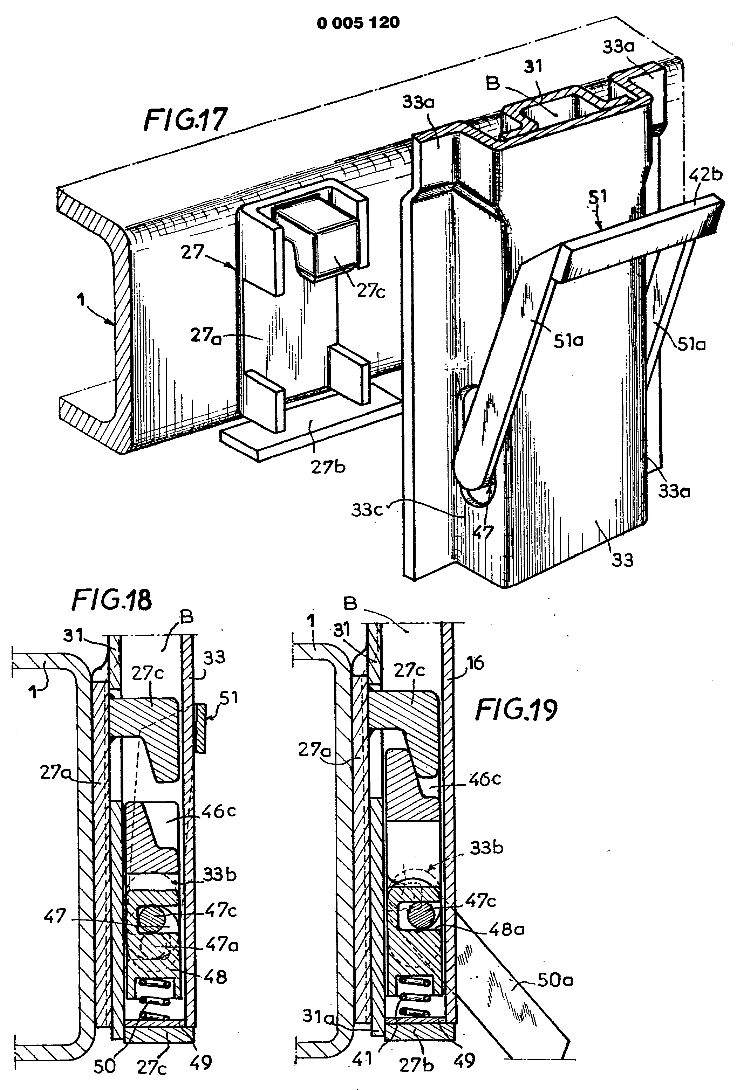

En se référant plus particulièrement aux figures 18, 19, 20, on décrit maintenant le fonctionnement du dispositif : Comme dans les réalisations précédentes, on place le montant sur son sabot en relevant le levier 51, ce qui a pour effet de dégager l'organe de verrouillage 46 pour descente de ce dernier sous l'action du vilebrequin dont les manetons 47a se trouvent en bas (figure 18). Lorsque le montant est en place, on abaisse le levier 51 jusqu'à la position intermédiaire où la partie 46c de l'organe de verrouillage est en appui contre la forme complémentaire 27c du sabot, sous l'action de poussée du ressort 50 (figure 19). Puis, on abaisse encore le levier 51 pour l'amener dans la position illustrée aux figures 20 et 21, c'est-à-dire en verrouillage final. Dans cette position, le maneton central 47c du vilebrequin est amené à son point le plus bas et entraîne le poussoir 48 qui comprime le ressort 50 en assurant ainsi une pression de verrouillage.

## Revendications

1. Dispositif pour rendre amovibles et verouillables les montants (11-12) supérieur et inférieur, articulés entre eux, de superstructures équipant notamment les châssis de véhicules de transport, du type comprenant un organe de verrouillage (35) coulissant dans le montant inférieur (12) et coopérant avec un organe complémentaire (26) solidaire du châssis du véhicule, l'organe de verrouillage étant actionné par un levier de manœuvre (39), caractérisé en ce que le montant supérieur (11) coopère avec un moyen d'accrochage (13) solidaire de la barre de rive (8) de la superstructure, autorisant l'engagement dudit montant supérieur (11) selon une position angulaire, dans un plan vertical par rapport à l'axe longitudinal horizontal dudit moyen d'accrochage, celui-ci, après engagement, assurant le verrouillage en position du montant supérieur (11), lors de son déplacement en hauteur, par suite de la mise en place du montant inférieur (12) et de la fixation des deux montants (11-12) à la superstructure, par l'actionnement de l'organe de verrouillage.

2. Dispositif selon la revendication 1, caractérisé en ce que l'extrémité supérieure profilée du montant supérieur (11) s'engage par la partie frontale du moyen d'accrochage solidaire de la barre de rive (8).

3. Dispositif selon les revendications 1 et 2, caractérisé en ce que le moyen d'accrochage solidaire de la barre de rive (8) est une pièce profilée formant boucle (13) et présentant une fente ($13^3$) sur sa face frontale formée angulairement par rapport à l'axe longitudinal de ladite boucle.

4. Dispositif selon la revendication 3, caractérisé en ce que le moyen d'accrochage formant boucle (13) est fixé par soudure sur la base inférieure de la barre de rive (8), la face arrière de la boucle (13) étant dans le prolongement du côté arrière ($8^1$) de la barre de rive, la largeur (1) de ladite boucle (13) étant inférieure à la largeur de la section (L) de la barre de rive.

5. Dispositif selon la revendication 3, comprenant le montant supérieur profilé en forme de U dont les ailes sont rabattues extérieurement pour former des pattes, caractérisé en ce qu'entre les ailes latérales du profilé est disposé un axe (14) destiné à entrer dans la boucle (13).

6. Dispositif selon la revendication 5, caractérisé en ce que l'axe (14) fixé aux ailes latérales du montant supérieur (11) est sensiblement en retrait par rapport à la base du montant supérieur.

7. Dispositif selon l'ensemble des revendications 2 et 3, caractérisé en ce qu'une butée (15) est convenablement disposée sur la face interne ($11^3$) de la base du montant supérieur (11), pour venir en appui contre la partie frontale inférieure ($13^4$) de la boucle, en vue d'assurer une perpendicularité parfaite du montant supérieur (11), lors de la fixation des montants inférieur (12) et supérieur (11).

8. Dispositif selon les revendications 1 et 5, caractérisé en ce que dans la partie inférieure du montant supérieur (11) est soudé, par l'une de ses extrémités, un support (16) formant berceau d'appui et de centrage.

9. Dispositif selon les revendications 1 et 5, caractérisé en ce que le montant inférieur (12), de même section que le montant supérieur (11), présente dans sa partie supérieure un prolongement en forme de U (18) destiné à venir s'engager dans la partie interne inférieure du montant supérieur (11).

10. Dispositif selon l'ensemble des revendications 8 et 9, caractérisé en ce que ledit prolongement (18) présente une patte profilée (19) soudée par l'une de ses extrémités au prolongement en U, ladite patte présentant à son autre extrémité, un axe fixe (17) déporté extérieurement, destiné à s'engager dans l'intérieur du berceau (16²).

11. Dispositif selon l'ensemble des revendications 1, 2, 3, 5, 7, 8, 9 et 10, caractérisé en ce que l'on présente angulairement le montant supérieur (11) face à la boucle (13) solidaire de la barre de rive (8), après engagement du montant supérieur (11), celui-ci est en appui par gravité de par son axe (14), dans le fond de la boucle, le montant inférieur (12) est disposé en articulation inférieure sur son support, l'axe déporté (17) établi à la partie supérieure du montant inférieur (12), coopérant avec l'intérieur du berceau (16²) solidaire de l'extrémité inférieure du montant supérieur (11), les deux montants (11-12) étant ainsi en position oblique par rapport à l'axe vertical de la boucle (13), sous une action de poussée vers l'intérieur de la superstructure, le montant inférieur (12) provoque le déplacement en hauteur du montant supérieur (11), l'axe d'accrochage (14) venant en appui dans le fond supérieur de la boucle (13).

12. Dispositif selon la revendication 8, caractérisé en ce que le support formant berceau d'appui et de centrage est une patte profilée (21) soudée à la face interne (20³) du montant supérieur (20), ladite patte (21) présentant deux parties extrêmes (21¹-21²) formant crochet.

13. Dispositif selon la revendication 12, caractérisé en ce que le montant inférieur (22) comprend intérieurement en débordement, deux profilés successifs (23-24) s'engageant l'un dans l'autre et soudés à leur extrémité inférieure (23¹-24¹) audit montant inférieur (22), le profilé (24) de plus petite section, étant constitué en deux demi-parties (24²-24³), sa face interne (24⁴) se trouvant dans le même plan que la face centrale interne (21³) de la patte (21) solidaire du montant supérieur, dans ledit profilé étant engagée et fixée l'extrémité inférieure (25¹) d'un élément de verrouillage inférieur (25) destiné à coopérer avec les extrémités crochetées (21¹-21²) de ladite patte (21).

14. Dispositif selon la revendication 13, caractérisé en ce que l'élément de verrouillage (25) comprend deux évidements (25²-25³) disposés en opposition par rapport à son plan longitudinal, la partie supérieure (25⁴) dudit élément (25) formant moyen d'appui, s'engageant dans la cavité interne formant berceau d'appui du crochet supérieur (21¹), la partie centrale (25⁵) dudit élément (25) venant directement en appui ou sensiblement, contre la face intérieure centrale (21³) de la patte.

15. Dispositif selon la revendication 1, le montant inférieur étant constitué d'un profilé avant en forme de U (32-33) s'étendant sur toute sa hauteur et d'un profilé arrière (30) s'étendant sur une hauteur limitée à la partie inférieure du montant et définissant un espace (A) pour contenir les mécanismes de verrouillage actionnés par le levier de manœuvre (39), un sabot (26) étant fixé au longeron (1) du châssis et autorisant l'engagement d'une languette de verrouillage (35a), ledit sabot étant aménagé pour servir d'appui au profilé avant, le levier étant soumis à l'action d'un ressort (44) et étant relié de façon pivotante à un bras dont l'extrémité opposée est elle-même reliée, également de façon pivotante, à un coulisseau (35) déplaçable verticalement, constitutif de l'organe de verrouillage, caractérisé en ce que les mécanismes de verrouillage sont solidaires du profilé arrière, l'ensemble pouvant être séparé du profilé avant ; sur le profilé arrière étant fixée une glissière (34) dans laquelle peut coulisser l'organe de verrouillage (35) actionné par le levier (39) ; ladite glissière (34) s'étendant depuis la partie supérieure du profilé arrière du montant, jusqu'à proximité de la partie supérieure du sabot (26), ledit levier (39) étant articulé sur les côtés de la glissière (34) par un axe (40) traversant à la fois les lumières oblongues (34a) desdits côtés et un bloc (41) coulissant dans la glissière et portant une tige de guidage (42) pour un ressort à boudins (44) comprimé entre le bloc (41) et un bouchon supérieur (43) du profilé arrière (30) ; lorsque la languette (35a) de l'organe de verrouillage (35) a pénétré et s'est appuyée dans la forme complémentaire de l'étrier ou gâche (26c) formé sur le sabot (26), sous l'action de pivotement du levier (39) entraînant l'organe de verrouillage par une biellette (37), l'articulation du levier (39) remonte dans les ouvertures oblongues (34a) en entraînant le bloc (41) qui comprime encore le ressort d'appui (44) de l'organe de verrouillage dans la gâche (26c).

16. Dispositif selon la revendication 1, le montant inférieur étant constitué d'un profilé avant (33) en forme de U s'étendant sur toute sa hauteur et d'un profilé arrière (31) s'étendant sur une hauteur limitée à la partie inférieure du montant et définissant un espace (B) pour contenir les mécanismes de verrouillage actionnés par le levier de manœuvre (51), un sabot (27) étant fixé au longeron (1) du châssis et autorisant l'engagement d'un organe de verrouillage (46), ledit sabot étant aménagé pour servir d'appui au profilé avant, caractérisé en ce que l'organe de verrouillage (46) monté à coulissement, directement dans l'espace (B) formé entre les profilés avant et arrière (31-33), présente le profilé avant (33) avec une ou des faces latérales ou « battues » (33c), en décrochement dans sa partie inférieure, pour le logement des bras (51a) du levier de verrouillage (51) reliés à l'organe de verrouillage (46) par un vilebrequin (47).

17. Dispositif selon la revendication 16, caractérisé en ce que l'organe de verrouillage (46) est constitué de deux branches (46a) reliées à leur partie supérieure ; l'extrémité desdites branches coopère par des entailles (46d) avec des manetons (47a) alignés du vilebrequin (47), tandis que la partie supérieure présente à l'arrière, une entaille inclinée (46c) pour coopérer avec une forme complémentaire en saillie (27c) rapportée sur le sabot (27) lorsque le levier est abaissé en entraînant en rotation le vilebrequin (47) dont les manetons (47a) viennent en position basse audessous de l'axe.

18. Dispositif selon l'ensemble des revendications 16 et 17, caractérisé en ce que le vilebrequin (47) présente, à l'opposé des manetons (47a) de liaison avec l'organe de verrouillage, un maneton central (47c) dans lequel s'engage par une entaille (48a) un poussoir (48) monté à coulissement par son embase (48b), dans un profilé de fermeture (49) du profilé arrière (31) du montant ; entre le poussoir (48) et le profilé de fermeture (49) étant interposé un ressort à boudins (50) comprimé pour l'appui de l'organe de verrouillage (46) dans la forme complémentaire (27c) du sabot (27) ; en fin de course du levier (51) vers le bas, le maneton central (47c) arrive au point mort bas, en comprimant encore le ressort (50) par déplacement du poussoir, ce qui assure le verrouillage.

19. Dispositif selon la revendication 16, caractérisé en ce que dans le cas où les montants constituent des éléments d'angle ou intermédiaires de superstructures comprenant aussi des éléments de garnissage tels que ridelles, panneaux ..., les leviers (51) sont maintenus dans leur position de verrouillage, c'est-à-dire rabattus verticalement vers le bas, par appui des rebords des ridelles ou panneaux (4) rabattus dans la ou les « battues » des montants, contre les bras des leviers.

## Claims

1. Device for making detachable and for interlocking the upper and lower inter-articulated posts (11-12) of superstructures intended more particularly for the equipment of the chassis or bodies of transport vehicles, of the type comprising an interlocking organ (35) slidably engaged within the lower post (12) and co-operating with a complementary organ (26) integral with the chassis or body of the vehicle, the interlocking organ being actuated by a handling lever (39), said device being characterized in that the upper post (11) co-operates with a hooking means (13) integral with the edging bar (8) of the superstructure for the engagement of said upper post (11) according to an angular position within a vertical plane relative to the horizontal longitudinal axis of said hooking means, the latter, after being engaged, providing the interlocking in position of the upper post (11) when said upper post is moved upwardly, on account of the positioning of the lower post (12) and of the fastening of the two posts (11-12) to the superstructure, by the actuation of the interlocking organ.

2. Device as claimed in Claim 1, characterized in that the contoured upper end of the upper post (11) is engaged with the front part of the hooking means integral with the edging bar (8).

3. Device as claimed in Claims 1 and 2, characterized in that the hooking means integral with the edging bar (8) is a loop-forming contoured part (13) having on the front face thereof a slot ($13^3$) which is formed angularly relative to the longitudinal axis of said loop.

4. Device as claimed in Claim 3, characterized in that the loop-forming hooking means (13) is secured by welding to the lower base of the edging bar (8), the rear face of the loop (13) being within the prolongation of the rear side ($8^1$) of the edging bar, the width (1) of said loop (13) being less than the width of the section (L) of the edging bar.

5. Device as claimed in Claim 3, comprising the U-shaped upper post the webs of which are bent externally for the formation of lugs, characterized in that between the lateral webs of this contoured upper post, there has been provided a pin (14) intended for penetrating into the loop (13).

6. Device as claimed in Claim 5, characterized in that the pin (14) secured to the lateral webs of the upper post (11) is somewhat recessed relative to the base of the upper post.

7. Device as claimed in Claims 2 and 3 together, characterized in that a stop (15) is conveniently disposed on the inside face ($11^3$) of the base of the upper post (11) so that this stop will be abutted agaisnt the lower front part ($13^4$) of the loop in order to ensure a faultless perpendicularity of the upper post (11) when the lower (12) and the upper (11) post are secured together.

8. Device as claimed in Claims 1 and 5, characterized in that a support (16) forming an abutment and centering crate is welded at one end thereof to the lower end of the upper post (11).

9. Device as claimed in Claims 1 and 5, characterized in that the lower post (12), having the same section as the upper post (11), is provided in its upper portion with a U-shaped extension (18) for engagement within the lower internal portion of the upper post (11).

10. Device as claimed in Claims 8 and 9, characterized in that said extension (18) is provided with a contoured lug (19) welded by one of the ends thereof to the U-shaped extension, said lug having at the other end an externally offset, fixed pin (17) for engagement into the crate ($16^2$).

11. Device as claimed in Claims 1, 2, 3, 5, 7, 8, 9 and 10 together, characterized in that the upper post (11) is presented angularly in front of the loop (13) integral with the edging bar (8) after the engagement of the upper post (11) which is abutted by gravity due to the axis (14) thereof within the bottom of the loop, the lower post (12) being disposed in lower linking upon the support thereof, the offset pin (17) established at the upper portion of the lower post (12) co-operating with the interior of the crate ($16^2$) integral with the lower end of the upper post (11), both posts (11-12) being thus in an oblique position relative to the vertical axis of the loop (13), under a pushing action toward the interior of the superstructure, the lower post (12) causing the upper post (11) to be shifted upwardly, the hooking axis (14) being abutted in the upper bottom of the loop (13).

12. Device as claimed in Claim 8, characterized in that the support forming an abutment and centering crate is a contoured lug (21) welded to the internal face ($20^3$) of the upper post (20), said lug (21) having two hook-forming extreme portions ($21^1$-$21^2$).

13. Device as claimed in Claim 12, characterized in that the lower post (22) comprises internally in projection two successive contoured parts (23-24) engaged within one another and welded at their lower end ($23^1$-$24^1$) to said lower post (22), the contoured part (24) of smaller section being made of two half-portions ($24^2$-$24^3$), the inside face ($24^4$) thereof being in the same plane as the inside central face ($21^3$) of the lug (21) integral with the upper post, the lower end ($25^1$) of a lower interlocking element (25) intended for co-operating with the hooked ends ($21^1$-$21^2$) of said lug (21) being engaged and fixed within said contoured part.

14. Device as claimed in Claim 13, characterized in that the interlocking element (25) includes two recesses ($25^2$-$25^3$) disposed opposite to the longitudinal plane thereof, the upper portion ($25^4$) of said element (25) forming an abutment means for engagement within the internal cavity which forms the abutment crate of the upper hook ($21^1$), the central portion ($25^5$) of said element (25) being moved directly or practically directly in abutment against the central inside face ($21^3$) of the lug.

15. Device as claimed in Claim 1, the lower post consisting of a U-shaped front contoured part (32-33) extending on the whole height thereof, and of a rear contoured part (30) extending along a height limited to the lower portion of the post and defining a space (A) for containing the interlocking mechanisms actuated by the operating lever (39), a shoe (26) being secured to the girder (1) of the chassis and permitting the engagement of an interlocking spline ($35^a$), said shoe being arranged to serve as abutment for the front contoured portion, the lever being subjected to the action of a spring (44) and being connected in a swivelling manner to an arm the opposite end of which is in turn connected, also in a swivelling manner, to a vertically shiftable slide block (35) which is the constituent element of the interlocking organ, said device being characterized in that the interlocking mechanisms are integral with the rear contoured part, and that the whole unit can be separated from the front contoured portion, there being secured onto the rear contoured part a slideway (34) in which the interlocking organ (35) actuated by the lever (39) can be moved slidably, said slideway (34) extending from the upper portion of the contoured part of the post up to the proximity of the upper portion of the shoe (26), said lever (39) being linked hingedly on the sides of the slideway (34) by means of a pin (40) extending through all of the oblong ports (34a) of said sides, as well as a block (41) sliding within the slideway and supporting a guide rod (42) for a coil spring (44) compressed between the block (41) and an upper plug (43) of the rear contoured part (30), the hinged linking of the lever (39) moving upwardly whithin the oblong apertures (34a) while moving therewith the block (41) which urges still more the abutment spring (44) of the interlocking organ into the clasp (26c) when the spline (35a) of the interlocking organ ($35^a$) has penetrated into and has been abutted against the complementary shape of the clevis or clasp (26c) formed on the shoe (26) under the swivelling action of the lever (39) which causes the interlocking organ to be shifted through the intermediary of a small rod (37).

16. Device as claimed in Claim 1, the lower post consisting of a U-shaped front contoured part (33) extending along the whole height thereof and of a rear contoured part (31) extending along a height limited to the lower part of the post and defining a space (B) for containing the interlocking mechanisms actuated by the operating lever (51), a shoe (27) being secured to the girder (1) of the chassis and permitting the engagement of an interlicking organ (46), said shoe being arranged to serve as abutment for the front contoured part, the device being characterized in that the interlocking organ (46) mounted slidably directly within the space (B) formed between the front and rear contoured parts (31-33) presents the front contoured part (33) with one or more lateral faces or « tread faces » (33c) in an off-set position in the lower portion thereof for the housing of the arms (51a) of an interlocking lever (51) connected to the interlocking organ (46) by means of a crankshaft (47).

17. Device as claimed in Claim 16, characterized in that the interlocking organ (46) consists of two limbs (46a) connected to one another at the upper portion thereof, the end of said branches co-operating by means of notches (46d) with crank-pins (47a) in alignment of the crankshaft (47), while the upper portion of said limbs has rearwardly a slanting notch (46c) for cooperation with a complementary shape (27c) projecting and inserted on the shoe (27) when the lever is depressed for driving in rotation the crankshaft (47) the crank-pins (47a) of which are brought in lower position beneath the pin.

18. Device as claimed in Claims 16 and 17 together, characterized in that the crankshaft (47) is provided opposite the crank-pins (47a) for connection with the interlocking organ, with a central crank-pin (47c) for the engagement by means of a notch (48a) of a pusher (48) mounted slidably by means of the base (48b) thereof within a closing contoured portion (49) of the rearward contoured part (31) of the post, there being interposed between the pusher (48) and the closing contoured portion (49) a coil spring (50) compressed for the abutment of the interlocking organ (46) within the complementary shape (27c) of the shoe (27), the central crank-pin (47c) arriving in the lower dead centre position at stroke end of the lever (51) downwardly while compressing still more the spring (50) through shifting of the pusher, the interlocking being effected thereby.

19. Device as claimed in Claim 16, characterized in that the levers (51), when the posts constitute angular or intermediary superstructure elements also comprising such filling elements as sideboards, panels, etc., are maintained in their interlocking position, i. e. these levers are bent vertically and downwardly through abutment of the flanges of the sideboards or panels (4) urged back into the « tread face » or « tread faces » of the posts against the arms of the levers.

## Ansprüche

1. Vorrichtung zur Abnahmbarkeit und Verriegelbarkeit der zwischengelenkigen Ober- und Niederständer (11-12) von Oberbauten, die insbesondere für die Ausstattung der Fahrgestelle von Transportfahrzeugen vorgesehen sind, in der Ausführung, die ein in dem Niederständer (12) gleitendes Verriegelungsorgan (35) aufweist, das mit einem mit dem Fahrzeuggestell festgemachten Zusatzorgan (26) zusammenwirkt und durch einen Betätigungshebel (39) betätigt wird, dadurch gekennzeichnet, dass der Oberständer (11) mit einem der Oberbaurandstange (8) zugeordneten Einhakenmittel (13) zum Eingreifen des genannten Oberständers (11) gemäss einer Winkelstellung in einer senkrechten Ebene zur länglichen waagrechten Achse des genannten Einhakenmittels zusammenwirkt, wobei dieses Einhakenmittel nach dem Eingreifen die Verriegelung der Stellung des Oberständers (11) bei der Höhenverstellung desselben infolge der Einstellung des Niederständers (12) und der Befestigung beider Ständer (11-12) auf dem Oberbau durch die Betätigung des Verriegelungsorgans bewirkt.

2. Vorrichtung gemäss Anspruch 1, dadurch gekennzeichnet, dass der profilierte Oberendteil des Oberständers (11) durch den Vorderteil des der Randstange (8) zugeordneten Einhakenmittels (8) eingreift.

3. Vorrichtung gemäss Anspruch 1 und 2, dadurch gekennzeichnet, dass das der Randstange (8) zugeordnete Einhakenmittel ein Profilierteil ist, der eine Schnalle (13) bildet und auf dessen Vorderfläche einen in bezug auf die längliche Achse der genannten Schnalle winkliggebildeten Schlitz ($13^3$) aufweist.

4. Vorrichtung gemäss Anspruch 3, dadurch gekennzeichnet, dass das schnallebildende Einhakenmittel (13) durch Schweissen auf der Niederunterlage der Randstange (8) befestigt ist, wobei die Hinterfläche der Schnalle (13) sich in der Verlängerung der Hinterseite ($8^1$) der Randstange befindet, und die Breite (1) der besagten Schnalle (13) kleiner als die Querschnittbreite (L) der Randstange ist.

5. Vorrichtung gemäss Anspruch 3, die den U-förmigen Oberständer aufweist, dessen Schenkel zur Bildung von Laschen äusserlich zurückgeklappt sind, dadurch gekennzeichnet, dass ein Stift (14) zum Eintritt in die Schnalle (13) zwischen den seitlichen Schenkeln des profilierten Oberständers angebracht ist.

6. Vorrichtung gemäss Anspruch 5, dadurch gekennzeichnet, dass der auf den seitlichen Schenkeln des Oberständers (11) befestigte Stift (14) auf einen gewissen Abstand in bezug auf die Unterlage des Oberständers zurückgezogen ist.

7. Vorrichtung gemäss Anspruch 2 und 3 zusammen, dadurch gekennzeichnet, dass ein Anschlag (15) auf der Innenfläche ($11^3$) der Unterlage des Oberständers (11) zur Abstützung gegen die Niedervorderfläche ($13^4$) der Schnalle entsprechend antsprechend angebracht ist, um eine einwandfreie senkrechte Linie des Oberständers (11) bei der Befestigung des Niederständers (12) und des Oberständers (11) zu schaffen.

8. Vorrichtung gemäss Anspruch 1 und 5, dadurch gekennzeichnet, dass ein Träger (16) zur Bildung einer Abstützungs- und Zentrierungswiege durch das eine Ende desselben in den Unterteil des Oberständers (11) verschweisst wird.

9. Vorrichtung gemäss Anspruch 1 und 5. dadurch gekennzeichnet, dass der Niederständer (12), von gleichem Querschnitt wie der Oberständer (11), mit einer Uförmigen Verlängerung (18) in dem Oberteil zum Eingreifen in den inneren Niederteil des Oberständers (11) versehen ist.

10. Vorrichtung gemäss Anspruch 8 und 9 zusammen, dadurch gekennzeichnet, dass die genannte Verlängerung (18) eine profilierte Lasche (19) aufweist, die an das eine derer Enden mit der U-förmigen Verlängerung verschweisst wird, wobei die genannte Lasche an ihrem anderen Ende einen nach aussen verschobenen, feststehenden Stift (17) aufweist, der zum Eingreifen ins Innere der Wiege ($16^2$) bestimmt ist.

11. Vorrichtung gemäss Anspruch 1, 2, 3, 5, 7, 8, 9 und 10 zusammen, dadurch gekennzeichnet, dass der Oberständer (11) vor die der Randstange (8) zugeordneten Schnalle (13) winkelseitig vorgelegt wird, wobei der Oberständer (11) nach dem Eingreifen durch seinen Stift (14) kraftschlüssig gegen den Boden der Schnalle abgestützt wird ; dass der Niederständer (12) in gelenkiger Niederabstützung auf dessen Träger angeordnet ist, wobei der verschobene, am Oberteil des Niederständers (12) befindliche Stift (17) mit dem Inneren der des Niederendes des Oberständers (11) zugeordneten Wiege ($16^2$) zusammenwirkt und beide Ständer sich damit in Schrägstellung in bezug auf die senkrechte Achse der Schnalle (13) befinden ; und dass der Niederständer (12) unter einer Schubeinwirkung nach dem Inneren des Oberbaues die Höhenverstellung des Oberständers (11) bewirkt, wobei der Einhakenstift (14) zur Abstützung auf den Oberboden der Schnalle (13) kommt.

12. Vorrichtung gemäss Anspruch 8, dadurch gekennzeichnet, dass der Träger zur Bildung einer Abstützungsund Zentrierungswiege eine profilierte Lasche (21) ist, die auf die Innenfläche ($20^3$) des Oberständers (20) verschweisst wird, wobei die genannte Lasche (21) zwei äussersten hakenbildenden Teile ($21^1$-$21^2$) aufweist.

13. Vorrichtung gemäss Anspruch 12, dadurch gekennzeichnet, dass der Niederständer (22) zwei nacheinanderfolgenden hinausragenden Profilierteile (23-24) innerlich aufweist, die ineinandergreifen und an ihrem unteren Ende ($23^1$-$24^1$) an den genannten Niederständer (22) verschweisst werden, wobei der Profilierteil mit kleinerem Querschnitt (24) aus zweier Halbteilen (24²-24³) besteht und seine Innenfläche (24⁴) sich in einer Ebene mit der zentralen Innenfläche (21³) der dem Oberständer zugeordneten Lasche (21) befindet, und dass das untere Ende (23¹) eines unteren Verriegelungsorgans (25) zur Mitwirkung mit den hakenförmigen Enden (21¹-21²) der genannten Lasche (21) in den besagten Profilierteil mit kleinerem Querschnitt eingreift.

14. Vorrichtung nach Anspruch 13, dadurch gekennzeichnet, dass das Verriegelungsorgan (25) zwei zu der länglichen Ebene dieses Organs entgegengestzt angeordneten Einkerbungen (25²-25³) aufweist, wobei der Oberteil (25⁴) des genannten Organs (25), der ein Abstützungsmittel bildet, in die innere Aushöhlung eingreift, die eine Abstützungswiege für den Oberhaken (21¹) bildet, und der mittlere Teil (25⁵) des genannten Organs (25) unmittelbar oder annähernd unmittelbar zur Abstützung gegen die zentrale Innenfläche (21³) der Lasche kommt.

15. Vorrichtung gemäss Anspruch 1, in welcher der Niederständer aus einem sich auf der ganzen Höhe erstreckenden U-förmigen Vorderprofilierteil (32-33) und aus einem sich auf einer durch den Unterteil des Ständers begrenzten Höhe erstreckendem Hinterprofilierteil (30) besteht, der einen zum Enthalten der durch den Betätigungshebel (39) betätigten Verriegelungstriebwerke bestimmten Raum (A) einschliesst, wobei ein Schuh (26) auf dem Längsträger (1) des Gestells zum Eingreifen einer Verriegelungspassfeder (35a) befestigt und als Abstützung für den Vorderprofilierteil ausgebildet ist und der unter der Wirkung einer Feder (44) stehende Hebel mit einem Arm verschwenkbar verbunden wird, dessen entgegengesetztes Ende mit einem höhenverstellbaren, das Verriegelungsorgan bildenden Schlitten (35) wiederum verschwenkbar auchverbunden wird, dadurch gekennzeichnet, dass die Verriegelungtriebwerke, bei Möglichkeit der Trennung der Gesamtvorrichtung und des Vorderprofilierteils, dem Hinterprofilierteil zugeordnet sind, und zwar mit Anordnung auf dem Hinterprofilierteil einer Gleitschiene (34) in welcher das vom Hebel (39) betätigte Verriegelungsorgan (35) gleiten kann und die sich vom Oberteil des Hinterprofilierteils des Ständers abbis in die Nähe des Oberteils des Schuhs (26) erstreckt ; dass der genannte Hebel (39) auf die Seiten der Gleitschiene (34) mittels eines die oblongen Öffnungen (34a) der genannten Seiten sowohl als auch einen in der Gleitschiene gleitenden Block (41) durchgehenden Stifts (40) gelenkig montiert wird, wobei der Block eine Führungsstange (42) für eine Schraubenfeder (44) aufweist, die zwischen dem Block (41) und einem oberen Verschluss (43) des Hinterprofilierteils (30) zusammengedrückt ist ; und dass nach dem Eintritt und der Abstützung der Passfeder (35a) des Verriegelungsorgans (35) in die Zusatzform des oder der auf dem Schuh (26) vorgesehenen Bügel oder Schliessklappe (26c) unter der Schwenkwirkung des mittels einer Stosstange (37) das Verriegelungsorgan mitnehmenden Hebels (39) das Gelenk des Hebels (39) in die oblongen Öffnungen bei Mitnahme des Blocks (41) angehoben wird, wobei die Abstützungsfeder (44) des Verriegelungsorgans in die Schliessklappe (26c) durch den Block weiter zusammengedrückt wird.

16. Vorrichtung gemäss Anspruch 1, in welcher der Niederständer aus einem sich auf der ganzen Höhe erstreckenden U-förmigen Vorderprofilierteil (33) und aus einem sich auf einer durch den Unterteil des Ständers begrenzten Höhe erstreckenden Hinterprofilierteil (31) besteht, der einem zum Enthalten der durch den Betätigungshebel (51) betätigten Triebwerke bestimmten Raum (B) einschliesst, wobei ein Schuh (27) auf dem Langsträger (1) des Gestells zum Eingreifen einer Verriegelungspassfeder (46) befestigt und als Abstützung für den Vorderprofilierteil ausgeführt ist, dadurch gekennzeichnet, dass das verschiebbar, unmittelbar in dem zwischen dem Vorderprofilierteil (31) und dem Hinterprofilierteil (33) vorgesehenen Raum (B) montierte Verriegelungsorgan (46) den Vorderprofilierteil (33) mit einer oder mehreren Seitenflächen oder « Trittflächen » (33c) vorlegt, die im Unterteil versetzt sind, und für das Unterbringen der mit dem Verriegelungsorgan (46) durch eine Kurbelwelle (47) verbundenen Arme (51a) des Verriegelungshebels (51) vorgesehen sind.

17. Vorrichtung gemäss Anspruch 16, dadurch gekennzeichnet, dass das Verriegelungsorgan (46) aus zwei am Oberteil aneinander verbundenen Schenkeln (46a) besteht, wobei das Ende der genannten Schenkel mittels Einschnitte (46d) mit in Fluchtlinie ausgerichteten Zapfenlagern (47a) der Kurbelwelle (47) zusammenwirkt, während der Oberteil nach hinten einen geneigten Einschnitt (46c) aufweist, der mit einer hinausragenden, auf den Schuh (27) angebauten Zusatzform (27c) bei Absenken des Hebels zur drehbaren Mitnahme der Kurbelwelle (47) zusammenarbeitet, derer Zapfenlager (47a) in Tiefstellung unterhalb des Stifts gelangen.

18. Vorrichtung gemäss Anspruch 16 and 17 zusammen, dadurch gekennzeichnet, dass die Kurbelwelle (47) entgegengesetzt den Zapfenlagern (47a) für die Verbindung mit dem Verriegelungsorgan ein Zentralzapfenlager (47c) aufweist, in welches ein durch seine Unterlage (48b) in einen Verschlussprofilierteil (49) des Hinterprofilierteils (31) des Ständers verschiebbar montierter Drückschieber (48) durch einen Einschnitt (48a) hindurch eingreift ; dass eine Schraubenfeder (50) zwischen dem Drückschieber (48) und dem Verschlussprofilierteil (49) zwischengeschaltet und für die Abstützung des Verriegelungsorgans in die Zusatzform (27c) des Schuhs (27) zisammengedrückt wird ; und dass das Zentralzapfenlager (47c) bei Beendigung der Abwärtsbewegung des Hebels (51) zum unteren Totpunkt gelangt, wobei die Feder (50) durch die Verschiebung des Drückschiebers weiter zusammengedrückt wird und somit die Verriegelung bewirkt.

19. Vorrichtung gemäss Anspruch 16, dadurch gekennzeichnet, dass die Hebel (51), falls die Ständer durch winkelige Elemente oder Oberbauzwischenelemente gebildet sind, die verschiedene Füllungselemente wie Wandleiter, Wandplatten, usw... aufweisen, in ihrer Verriegelungsstellung, d.h. senkrecht abwärtsgeklappt durch Abstützung der in die « Trittfläche » oder « Trittflächen » der Ständer und gegen die Hebelarme zurückgeklappten Randleisten der Wandleiter oder Wandplatten (4) gehalten werden.

FIG.1

FIG.12

FIG.11

FIG. 3

FIG. 2

0 005 120

FIG. 8

FIG. 6

FIG. 7

FIG. 5

FIG. 4

3

FIG. 9

FIG. 10

0 005 120

FIG.13

FIG.14

FIG.15

FIG.16

5

FIG.17

FIG.18

FIG.19

FIG. 21

27    27c    31    33c    46    46c    47a    47b    47b    22    22    33b    38c    39    50    49    33    27b    50    49    33a    1    51a    51a    51

FIG.20

31    21    B    27c    1    46c    27    46    38a    33b    27a    48a    47c    33    47    50    49    27c    51a    21    51

FIG.23

46c    46b    46    46a    46d    47b    47a    47    47c    47b    48    48a    48b

FIG.22

33a    27a    47    31    1    33a    33b    51a    51a    4    47a    47c    46    33    47b    4

7